Europäisches Patentamt

European Patent Office

Office européen des brevets

(19)

(11) **EP 1 093 041 B1**

(12) **EUROPÄISCHE PATENTSCHRIFT**

(45) Veröffentlichungstag und Bekanntmachung des Hinweises auf die Patenterteilung:
**19.12.2001 Patentblatt 2001/51**

(51) Int Cl.⁷: $G05D\ 1/08$

(21) Anmeldenummer: **00125878.9**

(22) Anmeldetag: **12.08.1996**

(54) **Verfahren zur Lageregelung und Stabilisierung eines Raumfahrzeuges**

Method for attitude control and stabilisation of a spacecraft

Procédé de contrôle d'attitude et de stabilisation d'engins spaciaux

(84) Benannte Vertragsstaaten:
**DE FR GB IT**

(30) Priorität: **11.08.1995 DE 19529675**

(43) Veröffentlichungstag der Anmeldung:
**18.04.2001 Patentblatt 2001/16**

(62) Dokumentnummer(n) der früheren Anmeldung(en) nach Art. 76 EPÜ:
**96112975.6 / 0 795 806**

(73) Patentinhaber: **Astrium GmbH**
**81663 München (DE)**

(72) Erfinder:
- **Surauer, Michael**
  **83339 Chieming (DE)**
- **Keeve, Rolf**
  **85521 Ottobrunn (DE)**
- **Ertongur, Nahit**
  **85521 Ottobrunn (DE)**

(56) Entgegenhaltungen:
**US-A- 4 521 855          US-A- 5 308 024**

**Beschreibung**

Stand der Technik

Die gegenwärtigen "Normal-Mode"-Regelungen für 3-achsig stabilisierte Raumfahrzeuge basieren auf zwei grundlegenden Regelungskonzepten mit prinzipiell unterschiedlichen Vor- und Nachteilen.

Regelungssysteme ohne Drallsteifigkeit

Merkmale:

- Der resultierende Drallvektor ist nominell verschwindend klein = "0"
- Kontinuierliche dreiachsige Lagemessung (Roll, Pitch, Yaw)
  Typische Lagemessysteme:

  - Erdsensor (2-achsig)
  - Sonnensensor (1-achsig) und/oder Sternsensor (2-achsig)
  - Integrierte Kreisel (1- bis-3-achsig) ODER
  - Sternsensor (3-achsig)
  - Integrierte Kreisel (3-achsig)

- Stellglieder zur Erzeugung linear unabhängiger Kontrollmomente um alle 3 Satellitenachsen
  Typische Aktuatorsysteme:

  - 4-Reaktionsräder (3-achsige Momente, 0.1 Nm, Redundanz)
  - Triebwerke (3-achsige Momente) zur Drallentladung ODER
  - Magneto Torquer (2- oder 3-achsige Momente 1 - 3 µNm) zur Drallentladung ODER
  - Solargenerator (2-achsige Momente 1 - 3 µNm) zur Drallentladung

**VORTEILE:**

- Die Pointing-Genauigkeit ist aufgrund der kontinuierlichen 3-achsigen Lagemessung und der Generierung von unabhängigen Regelmomenten um Roll, Pitch und Yaw bestimmt durch die Messfehler und die Reglerauslegung und nicht durch die äußeren Störmomente.
- Übergangsphasen (z.B. nach Triebwerksregelung zur Orbitalpositionshal-tung) mit hohen Anfangsablagen o/u Anfangsgeskeiten sind gut beherrschbar, weil die Regelkreisverstärkung und Bandbreite wegen des Stellmomentenbereichs Reaktionsräder (0.1 Nm) den Anforderungen entsprechend gewählt werden können.
- "Inklined" Operation ist ohne zusätzlichen Treibstoffverbrauch möglich.

**NACHTEILE:**

- Hohe Kosten der Sensorik für die kontinuierliche 3-achsige Lagemessung
- "Thermal distortion" zwischen dem Referenzsensor und den an verschiedenen Orten im Satelliten angebrachten optischen Lagesensorköpfen verschlechtert die Yawgenauigkeit erheblich
- Im Fehlerfall (Defekt im Regelkreis) gibt es keine passiv stabile Lage des Satelliten, was eine erhebliche Einbuße an Zuverlässigkeit bei langen operationellen Betriebszeiten (2-15 Jahre) darstellt).

Regelsysteme mit Drallsteifigkeit

Merkmale:

- Der resultierende Drall ist deutlich von "0" verschieden und hat nominell nur eine y-Komponente im Satelliten (5-100 Nms).
- WHECON-Prinzip

- Zweiachsige (Roll, Pitch) Lagemessung, wobei normalerweise "Erdsensoren" verwendet werden
- Stellglieder zur Erzeugung von Kontrollmomenten zur Stabilisierung von Nutation und Orbitkopplung

Typische Aktuatorsysteme:

- Aktuatoren zur Stabilisierung der Nutation und Pitchachse

    -- MATRA/DASA-Konzept: 1 Bias Momentum Drallrad in y-Richtung und linear Kontrollmomentgenerierung um Pitch und ein Triebwerkspaar mit "Roll/Yaw-Komponente"
    -- SS/LORAL-Konzept: 2 Bias Momentum Drallräder in V-Konfiguration und
    1 Bias Momentum Drallrad und 1 Reaktionsrad in L-Konfiguration oder
    GE-ASTRO-Konzept: 1 Bias Momentum Drallrad und ein 1-achsiger Gimball-Mechanismus
    wobei der resultierende Drallvektor nominell in y-Richtung zeigt und linear Kontrollmomente um Pitch und Roll erzeugt werden

- Aktuatoren zur Stabilisierung der Orbitkopplung

    -- DASA-Konzept: Ein Triebwerkspaar mit "Roll/Yaw-Komponente"
    -- GE-ASTRO-Konzept: Magneto-Torquer mit "Yaw-Komponente"
    -- MATRA-Konzept: Solartorque-Kompensationstechniken mit "Yaw-Komponente"

**VORTEILE** des WHECON-Prinzips:

- Robustes und einfaches Regelsystem mit Erdsensor als Lagereferenz
- Im Fehlerfall (Ausfall der Regelung) hat der Satellit eine stabile Lage wegen des gespeicherten Dralls mit der y-Achse (Drallsteifigkeit), so dass man mit einfachen und bewährten Strategien die Reakquisition durchführen kann.

**NACHTEILE** des WHECON-Prinzips:

- Die Drallsteifigkeit bringt auch eine unerwünschte Verkopplung (Nutation) zwischen Roll und Yaw
- Übergangsphasen mit hohen Anfangslagen oder/und hohen Anfangsgeschwindigkeiten sind schlecht beherrschbar (Nutation) und insbesondere in Yaw können diese nur sehr langsam abgebaut werden (keine Yawmessung und sehr kleines Yawkontrollmoment 10-50 μNm)
- Der Yawfehler ist in erster Linie von den "Äußeren Störmomenten" und dem Drall in der Pitchachse abhängig und durch die Reglereinstellung wenig beeinflussbar.
- "inklined Operation" ist mit DASA- und MATRA-Konzept nicht möglich.
- bei hohen Normalbetriebsstörmomenten (> 15 μNm) und langen Sat-Betriebszeiten (> 12 Jahre) verbraucht die Triebwerksregelung mehr als 25 kg Treibstoff (DASA-Konzept)

NAMC-Prinzip

Verbesserte DASA-Normalmoderegelung

- 3-achsige Lagemessung mit Erdsensor und Sonnensensor
- Yawschätzer im Bereich der Kolinearität von Sonne und Erde
- Bias Momentum Drallrad in der y-Richtung und lineare Generierung des Pitch-Regelmoments
- Erzeugung von unabhängigen Kontrollmomentimpulsen mit separaten Triebwerkspaaren für Roll- und Yaw-Achse
- Anwendung von Solartorque Kompensationstechniken zur Reduzierung des Treibstoffbedarfs

**VORTEILE** des NAMC-Prinzips:

- Die Verwendung

-- der optischen Sonnen- und Erdsensoren und eines Yawschätzers in den Kolinearitätsbereichen zur 3-achsigen Lagebestimmung

-- des Drallrades und separater Roll- und Yaw-Triebwerkspaare zur Generierung von unabhängigen Regelmomenten in Roll, Pitch und Yaw verbessert das Verhalten während der Übergangsphasen erheblich, ferner wird die Yawgenauigkeit nicht mehr durch die äußeren Störmomente und den Pitchdrall, sondern durch Lagebestimmungsfehler und die Reglerauslegung bestimmt.

- Im Fehlerfall gelten dieselben Vorzüge wie für das WHECON-Prinzip

**NACHTEILE** des NAMC-Prinzips:

- Bezüglich der "Thermal Distortion" zwischen Erd- und Sonnensensorköpfen gilt der gleiche negative Einfluss auf die Yawgenauigkeit wie für REGELSYSTEME OHNE DRALLSTEIFIGKEIT
- "Inclined operation" benötigt 20 kg Treibstoff (gilt für 10 N - Triebwerke, Verbesserung durch neue 4 N - Triebwerke um Faktor 2)
- Die Rollgenauigkeit ist aufgrund der minimalen Triebwerksimpulse zwar um einen Faktor 2 besser als beim DASA WHECON-Konzept, aber dennoch limitiert.

Merkmale und Vorteile der Erfindung

Die Erfindung löst die bisherigen Problembereiche der bisher angewandten Regelsysteme (siehe Stand der Technik) und erweitert den Einsatzbereich um die Lageregelung während der Positionshaltungsmanöver mit "ELEKTRISCHEN TRIEBWERKEN" über mehrere Stunden Manöverzeit mit Normalbetriebsgenauigkeiten und minimalem Treibstoffverlust.

Das erfindungsgemäße Verfahren dient zur Lageregelung und Stabilisierung eines dreiachsenstabilisierten, drallbehafteten, auf einer Umlaufbahn um einen Himmelskörper, beispielsweise die Erde, umlaufenden Raumfahrzeuges, welches mit einer Drallradanordnung, die einen Drehimpulsvektor in einer bevorzugten Richtung (Nickrichtung) sowie Regelmomente um alle drei Achsen eines raumfesten Koordinatensystems unabhängig voneinander zu erzeugen in der Lage ist. Es ist dabei mit die Lagebestimmung um zwei senkrecht zueinander und senkrecht zu der bevorzugten Richtung orientierte Querachsen (Rollachse, Gierachse) messenden Lagesensoren und mit Aktuatoren zur Erzeugung äußerer Regelmomente ausgestattet. Erfindungsgemäß ist vorgesehen, dass für den Fall fehlender Lageabweichungsmessung bezüglich einer der beiden Querachsen (Gierachse) auf einem Abschnitt der Umlaufbahn zur Schätzung dieser fehlenden Lageabweichung (Gierablage $\Psi$) ein Beobachter verwendet und in diesen geschätzte Störmomente gemäß einer zeitabhängigen Funktion eingeführt werden, welche aus Größen für die Störmomente sowie für deren zeitliche Ableitungen ermittelbar sind, die einerseits vor Eintritt des Raumfahrzeuges in den Abschnitt der Umlaufbahn und andererseits nach dem vorhergehenden Austritt aus diesem Abschnitt durch zeitliche Integration von $H_x = h_y \Psi$ und $H_z = -h_y \Phi$ bestimmt worden sind, wobei $h_y$ die Größe des von der Drallrad-anordnung in der bevorzugten Richtung erzeugten Drehmomentes und $\Phi$, $\Psi$ die von den Lagesensoren außerhalb des Abschnittes der Umlaufbahn gemessenen Lageabweichungen um die beiden Querachsen sind.

Die wichtigsten Merkmale und signifikanetesten Vorteile der Erfindung werden im folgenden kurz beschrieben.

**Aktuator-Konfiguration zum Erzeugen unabhängiger Kontrollmomente um alle 3**

**Satellitenachsen und der Drallsteifigkeit in der Pitchachse**

- Spezielle 4-Wheel Anordnung (siehe technische Beschreibung) oder
2 Bias -Momentum Drallräder jeweils zweiachsig schwenkbar mit resultierendem Drall in der Pitchachse und der Möglichkeit, unabhängige Regelmomente um alle Satellitenachsen zu generieren
- Drallräderentladung in ausgewählten Orbit-Positionen mit Triebwerken oder
kontinuierliche oder quasi-kontinuierliche Regelung der Drallrädergeschwindigkeiten (des Drallvektors) durch Generieren äußerer Regelmomente mittels

■ Triebwerkspulse
oder

- ■ Magnetotorquer
  oder
- ■ Solartorque-Techniken

**Sensor-Konfiguration - Roll, Pitch und Yaw Attitude Bestimmung**

- 2-achsige Roll und Pitch Attitude Sensoren

  -- Zweiachsige Roll und Pitch Messung mit Erdsensor
  -- Kontinuierliche neuartige YAWSCHÄTZUNG (siehe technische Beschreibung)
  -- Neuartige STÖRMOMENTKOMPENSATION (siehe technische Beschreibung)

- 3-achsige Attitude Sensorik

  -- Zweiachsige Roll und Pitch Messung mit Erdsensor
  -- Kontinuierliche mind. dritte Lagereferenz durch Sternsensor oder präzise Kreiselsensoren
     oder
  -- Dritte Lagereferenz mittels Sonnensensor mit Rundumsicht und Orbitmodell im Bordrechner
  -- Neuartiger YAWSCHÄTZER für den Bereich der Kolinearität von Erde und Sonne (siehe technische Beschreibung)
  -- Neuartiger STÖRMOMENTESCHÄTZER wird nur im Kolinearitätsbereich verwendet (siehe technische Beschreibung)

**Verfahrensmerkmale (siehe technische Beschreibung)**

- Aktive NUTATIONSENTKOPPLUNG durch den Regelalgorithmus bringt auch die ENTKOPPLUNG von Roll und
  Yaw Dynamik bei Erhalt der DRALLSTEIFIGKEIT des Satelliten
- Neuartiger YAWSCHÄTZER hat folgende Merkmale

  -- Verwendung der Übertragungsfunktion des geschlossenen Rollregelkreises (reduziertes Modell)
  -- Reduzierter Yaw-Observer 2. Ordnung
  -- Das Yaw-Beobachtbarkeitsmaß @ ist um ungefähr eine Zehnerpotenz
     $@ = (OMNUT/OMORB)^{1/2}$
     OMNUT: Nutationsfrequenz
     OMORB: Orbifrequenz
     besser als bei den bisher angewandten Yawschätzern, so dass die Einschwingzeitdauer mit dem selben Faktor
     @ verkürzt wird.
  -- genaue Kompensation durch Wheel Entladungs-Regelgesetz der konstanten Störmomente im inertialen System und genaue Schätzung und Kompensation der x-Komponente des konstanten Störmoments im Satelliten-Referenz-System mit äußeren Momentengebern wie S.G., Magneto-Torquern, chemischen und elektrischen Triebwerken. Die z-Achse des konstanten Störmoments im Satelliten-Referenz-System kann über einen
     Modellfaktor kompensiert werden. Basis für diese genauen Schätzungen sind die linearen Stellglieder (wheels)
     im Gegensatz zu den nichtlinearen Stellgliedern S.G. (Thermalverformung, Triebwerke, Magneto-torquer (Magnetfeldänderung)).

- Kontinuierliche Drallregelung (Drallradgeschwindigkeit) oder Drallradentladung mit externen Momentengebern

  -- Im Falle einer zur Verfügung stehenden Giermessung gibt es zwei Möglichkeiten, die gleichwertig bezüglich
     der Lagegenauigkeit und der Treibstoffnutzung sind:

     • Periodische Drallradentladung mit chemischen Triebwerken (während SKM oder während der Knotenlinien des Orbits), um den Treibstoff optimal zu nutzen
     • Kontinuierliche Regelung durch Solar Torque Kompensation oder Magneto Torquer oder mit elektrischen
       Triebwerkssystemen.

-- Falls keine separate Giermessung zur Verfügung steht, gibt es zwei Möglichkeiten, die unterschiedliche Lagegenauigkeiten im Gieren zur Folge haben:

- Kontinuierliche Regelung der Drallkomponenten der Räder mit dem entsprechenden Regelgesetz und Störmomentenkompensation (siehe technische Beschreibung) führt zu einer sehr hohen Gier-Lagegenauigkeit, wobei die externen Torque-Geber (Magneto Torquer, Solar Torquers) chemische und elektrische Triebwerke sein können.
- Die periodische Entladung (während SKM oder Orbitknoten) mit den selben externen Torquegebern führt zu einer Lagegenauigkeit, die ca. um einen Faktor 2 schlechter ist.

**VORTEILE:**

1. Aktive Nutationsentkopplung durch den Regelalgorithmus bei Erhaltung der Drallsteifigkeit des Satelliten und optimales Verhalten während der Übergangsphasen zu/nach Triebwerksbetriebsphasen Der Vorteil der Drallsteifigkeit im Fehlerfall (Ausfall der Regelung), eine stabile Lage des Satelliten sicherzustellen, wird durch die gewählte Wheel-Konfiguration beibehalten und zusätzlich wird durch die aktive Nutationsentkopplung des Regelalgorithmus auch die Roll- und Yaw-Achse entkoppelt, so dass die Übergänge nach Triebwerksbetriebsphasen gut beherrschbar werden, wobei die notwendige Regelkreisverstärkung und die Closed Loop Bandbreite wegen der oben beschriebenen Drall-/Reaktionsrad-Anordnungen und der daraus resultierenden quasi linearen hohen Kontrollmomentbereiche (ung. = 1 Nm) um alle drei Achsen wesentlich höher sind und somit die Robustheit der Regelungsperformance enorm verbessern. Die Übergänge zu den Triebwerksbetriebsphasen werden im folgenden beschrieben, optimiert bezüglich Treibstoffverbrauch und Orbitstörung.

Die Übernahme der 3-Achsenreferenz wird zunächst mit den Drallrädern als Stellgliedern durchgeführt und erst wenn der Regelkreis sich im stationären Zustand befindet, wird auf die Triebwerksregelung umgeschaltet.

2. Hohe Lagegenauigkeit in allen Achsen, insbesondere in Yaw mit Erdsensormessung alleine als Basis zur Lagebestimmung des Satelliten

Die Lagegenauigkeit in Roll und Pitch ist durch die Erdsensorfehler vorgegeben, weil die quasi linearen Stellglieder (Drall-/Reaktionsräder), unterstützt durch den Regelalgorithmus (anders als bei Triebwerksregelung), keinen wesentlichen Anteil zum Lagefehlerbudget beitragen.

Die Kalibirierung der Thermaldistortion von Sonnen- und/oder Stemsensoren und die Art der Gierlage und Gierstörmomentenkompensation (siehe technische Beschreibung) bringt eine enorme Verbesserung der Lagegenauigkeit für die gesamte operationelle Phase des Satelliten. Im Fall, dass keine eigenen Giermessung zur Verfügung steht, wird durch den speziellen Gierschätzer und die "externe Drallradregelung" mit Schätzung des Störmomentenverlaufs ebenfalls eine wesentliche bessere Giergenauigkeit im Normal Mode erreicht.

3. Minimalisierung von Orbitstörung und Treibstoffverbrauch während der operationellen Phase des Satelliten

Die Regelung mit Drallrad-Momenten um alle drei Achsen (während Transitionsphase keine Triebwerkspulse) und die erhöhte Gier-Lagegenauigkeit für insbesondere bei Verwendung von elektrischen Triebwerken für Station Keeping Manöver führen zu einem minimalen Treibstoffverbrauch in der operationellen Phase.

Eine beispielhafte Hardware-Konfiguration ist in Bild 1 dargestellt.

Der Normalbetriebs-Regler kann sowohl Erd- als auch Sonnensensoren verwenden. Die optische Achse des Erdsensors verläuft parallel zur z-Achse des Raumfahrzeugs. Drei Sonnensensor-Köpfe sorgen für volle Rundumsicht um den Raumflugkörper. Das Gesichtsfeld der Sonnensensor-Anordnung ist in Bild 2 dargestellt. Es beträgt $0° \leq \alpha \leq 360°$ ;$-64° \leq \beta \leq 64°$

Als Aktuatoren können z.B. Düsen oder Drall- und Reaktionsräder verwendet werden. Die Düsen werden im Normalbetrieb höchstens im Notfall zur Entdrallung verwendet. Die Anordnung der Drall- und Reaktionsräder für kleine Drehungen des Raumfahrzeugs und bei hohem Drall um die Gierachse einer erfindungsgemäßen Ausführungsform wird im folgenden beschrieben.

Die Anordnung umfaßt zwei Drall- und zwei Reaktionsräder. Die Drallräder sind symmetrisch bezüglich der y/z-Ebene des Raumfahrzeugs um die Winkel $\pm \nu$ von der y-Achse geneigt. Die geneigten Drallradachsen und die y-Achse liegen gewöhnlich in einer Ebene und werden um die y-Achse um einen Winkel $\eta$ gedreht. Die Richtung des Drallvektors des Reaktionsrades ist parallel zur x-Achse bzw. zur z-Achse (Bild 3). Typischerweise liegen die Werte für $\eta$ und $\nu$ im Bereich $0° < \eta < 90°$ bzw. im Bereich $0° < \nu < 90°$. Die Basiskonfiguration besteht aus einem Drallrad (FMW1 oder FMW2) und zwei Reaktionsrädern.

Für den Notfall werden zwei Fälle betrachtet:

a) Bei Ausfall von einem Drallrad werden das verbleibende Drallrad und die beiden Reaktionsräder zur Regelung verwendet.
b) Bei Ausfall von einem Reaktionsrad werden beide Drallräder und das verbleibende Drallrad zur Regelung verwendet.

Verwendung der Solarflügel-Ansteuerung (SADA) als Aktuator

Die Solarflügel-Ansteuerung (SADA) wird im nominalen Betriebszustand des Normalbetriebs als Aktuator verwendet, um die Auswirkungen der Störmomente im Roll/Gier-Regelungssystem zu kompensieren.
Die Eulergleichung für die auf den Schwerpunkt bezogene Drehbewegung eines starren Raumflugkörpers mit Drall- und Reaktionsrädern lautet:

$$\dot{\underline{h}}_s(B) + \underline{\omega} \times \underline{h}_s = \underline{T}_C + \underline{T}_D + \underline{T}_G \tag{1}$$

wobei

$\underline{h}_s$ der Gesamtdrall des Raumflugkörpers einschließlich Drallrädern um seinen Schwerpunkt ist,
$\underline{\omega}$ die absolute Winkelgeschwindigkeit ist mit den Komponenten

$$\underline{\omega} = [\omega_x, \omega_y, \omega_z]^T \tag{2}$$

und $\underline{T}_C$, $\underline{T}_D$, $\underline{T}_G$ äußere Momente sind, welche den Einfluß der Regelung, der Störung und des Schwerkraftgradienten beschreiben.

Man beachte, daß

- alle unterstrichenen Buchstaben Vektoren im körperfesten Koordinatensystem darstellen, falls es nicht anders angegeben ist,
- und der Index "(B)" eine Differenziation bezogen auf das körperfeste Koordinatensystem darstellt, welches seinen Ursprung im Körperschwerpunkt hat.

Die äußeren Reglermomente stammen hauptsächlich aus zwei Quellen,

$$\underline{T}_C = \underline{T}_{CTH} + \underline{T}_{CSA} \tag{3}$$

wobei $\underline{T}_{CTH}$ das von den Düsen am Raumflugkörper aufgebrachte Reglermoment ist und $\underline{T}_{CSA}$ das vom Solardruck auf die Solarflächen übertragene Regelmoment ist. Der Gesamtdrall des Raumflugkörpers in Gl. (1) setzt sich aus zwei Teilen zusammen,

$$\underline{h}_s = \underline{h}_w + \underline{h}_v \tag{4}$$

wobei $\underline{h}_w$ der in den Drallrädern gespeicherte Drall im körperfesten Koordinatensystem und $\underline{h}_v$ der Drall des Raumflugkörpers ohne den Drall der Drallräder ist.
Die Komponenten des Drallräder-Dralls im körperfesten Koordinatensystem seien

$$\underline{h}_w = [h_x, h_y, h_z]^T. \tag{5}$$

Es kann eine Linearisierung der nichtlinearen Bewegungsgleichungen erfolgen. Im folgenden wird angenommen, daß der Raumflugkörper im geostationären Orbit fliegt und die Achsen des Satelliten-Koordinatensystems ($x_s$, $y_s$, $z_s$) zu Beginn mit dem Orbitreferenz-Koordinatensystem zusammenfallen. Die +$z_s$-Achse zeigt zum Erdmittelpunkt, die +$y_s$-Achse steht senkrecht zur Äquatorebene nach Süden zeigend und die +$x_s$-Achse zeigt in Flugrichtung. Ferner habe der Raumflugkörper kleine Anfangsauslenkungen, die als Voreinstellungs-Euler-Winkel $\psi_b$, $\theta_b$, und $\phi_b$ um die $z_s$-

Achse, die $y_s$-Achse, bzw. die $x_s$-Achse des Satelliten- bzw. körperfesten Systems bezeichnet werden.

Die Linearisierung kann erfolgen, wenn der Raumflugkörper von seiner Ausgangslage ausgehend um die kleinen Euler-Winkel $\psi$, $\theta$, und $\phi$ weiter ausgelenkt wird.

Für die Bewegungsgleichungen ergibt sich mit den üblichen Näherungen für kleine Winkel und Winkelgeschwindigkeiten im stationären Zustand:

$$I_x \cdot \dot{\omega}_X - h_y \cdot \omega_o \cdot \Delta\phi - h_y \cdot \Delta\dot{\psi} - h_z \cdot \omega_o + h_x \cdot \omega_o \cdot \Delta\theta + \dot{h}_X \approx T_{cx}{}^o + T_{dx}{}^o$$

$$I_y \cdot \dot{\omega}_Y + \qquad\qquad\qquad\qquad \dot{h}_y \approx T_{cy}{}^o + T_{dy}{}^o \qquad\qquad (6)$$

$$I_z \cdot \dot{\omega}_Z - h_y \cdot \omega_o \cdot \Delta\psi + h_y \cdot \Delta\dot{\phi} + h_x \cdot \omega_o - h_z \cdot \omega_o \cdot \Delta\theta + \dot{h}_Z \approx T_{cz}{}^o + T_{dz}{}^o.$$

Die Roll-Gier Dynamik ist nun von der Nick-Dynamik entkoppelt.

Für die Drallrad-Reglermomente wird die Schreibweise

$$\underline{T}_w = [-\dot{h}_x, \ -\dot{h}_y, \ -\dot{h}_z]^T \qquad\qquad (7)$$

eingeführt, so daß sich die Bewegungsgleichungen des zu regelnden Systems ergeben zu

$$I_x \cdot \ddot{\phi} - h_y \omega_o \cdot \phi - h_y \cdot \dot{\psi} - (-\theta_b h_x + \phi_b h_y + h_z) \cdot \omega_o \approx T_{wx} + T_{cx}{}^o + T_{dx}{}^o$$

$$I_y \cdot \ddot{\theta} \approx T_{wy} + T_{cy}{}^o + T_{dy}{}^o \qquad\qquad (8)$$

$$I_z \cdot \ddot{\psi} - h_y \omega_o \cdot \psi + h_y \cdot \dot{\phi} + (h_x - \psi_b h_y + \theta_b h_z) \cdot \omega_o \approx T_{wz} + T_{cz}{}^o + T_{dz}{}^o.$$

Die Herleitung des reduzierten Beobachters zur Gierwinkel-Bestimmung basiert auf folgenden Beobachter-Gleichungen:

Der Gierwinkel kann während der Eklipse und im Kollinearitätsgebiet nicht aus Messungen von optischen Sensoren bestimmt werden. In diesen Fällen wird der Gierwinkel mit Hilfe eines Gierwinkel-Beobachters geschätzt, in welchen als Meßgröße nur der Rollwinkel eingeht.

Der Gierwinkel-Beobachter basiert auf den vorgenannten linearisierten Systemgleichungen für Roll- und Gierbewegung im Orbitreferenz-Koordinatensystem.

Die Terme $(-\theta_b h_x + \phi_b h_y + h_z) \cdot \omega_o$ und $(h_x - \psi_b h_y + \theta_b h_z) \cdot \omega_o$ enthalten Parameter und Variablen, welche entweder bekannt sind oder gemessen werden können. Deshalb können sie durch Drallrad-Reglermomente kompensiert werden und verschwinden daher aus den Systemgleichungen.

Der Beobachter basiert nun auf den folgenden vereinfachten Gleichungen:

$$I_x \cdot \ddot{\phi} - \omega_0 \cdot h_y \cdot \phi - h_y \cdot \dot{\psi} = T_{wxac} + T_{cx} + T_{dx} \qquad\qquad (9a)$$

$$I_z \cdot \ddot{\psi} - \omega_0 \cdot h_y \cdot \psi + h_y \cdot \dot{\phi} = T_{wzac} + T_{cz} + T_{dz} \qquad\qquad (9b)$$

mit

$$T_{wxc} = (-\theta_b h_x + \phi_b h_y + h_z)\omega_o \qquad\qquad (10a)$$

$$T_{wzc} = (h_x - \psi_b h_y + \theta_b h_z)\,\omega_o \qquad\qquad (10b)$$

Es werden folgende Zustandsvariablen eingeführt:

$$H_z = -h_y \cdot \phi \tag{11a}$$

$$H_x = h_y \cdot \psi, \tag{11b}$$

so daß sich die Systemgleichungen (Gl. (9a, b)) schreiben lassen als:

$$-(I_x/h_y) \cdot \ddot{H}_z + \omega_0 \cdot H_z - \dot{H}_x = T_{wxac} + T_{cx} + T_{dx} \tag{12a}$$

$$(I_z/h_y) \cdot \ddot{H}_x - \omega_0 \cdot H_x - \dot{H}_z = T_{wzac} + T_{cz} + T_{dz}. \tag{12b}$$

Sei

$$\Omega_{Nx} = h_y/I_x \tag{13a}$$

und

$$\Omega_{Nz} = h_y/I_z. \tag{13b}$$

Wenn $I_x$ und $I_z$ ungefähr gleich groß sind, so gilt

$$\Omega_N = \Omega_{Nx} \approx \Omega_{Nx}, \tag{13c}$$

so daß Gln. (9a, b) geschrieben werden können zu

$$\ddot{H}_z = \omega_0 \cdot \Omega_N \cdot H_z - \Omega_N \cdot \dot{H}_x - \Omega_N (T_{wxac} + T_{cx} + T_{dx}) \tag{14a}$$

$$\ddot{H}_x = \omega_0 \cdot \Omega_N \cdot H_x + \Omega_N \cdot \dot{H}_z + \Omega_N (T_{wzac} + T_{cz} + T_{dz}). \tag{14b}$$

$H_z$ ist proportional zum Rollwinkel und kann gemessen werden. Daher kann auch die Ableitung berechnet werden. Der Koeffizient $\Omega_N$ ist ebenfalls bekannt, so daß der Term "$\Omega_N \cdot H_z$" aus Gl. (14b) kompensiert werden kann, wenn die Reglermomente entsprechend gewählt werden.
Um die Sensitivität des Beobachters bezüglich Störmomenten zu erhöhen, wird dem Beobachter als Meßgröße nicht $H_z$ sondern $\int H_z \, dt$ zugeführt.
Für die Beobachtermatrix ergibt sich:

$$INT(H_x) := K_I \int H_x^* dt = \frac{(Tcz + Tdz)}{T_3^3 s^3 + T_2^2 s^2 + T_1 s + 1} \tag{15b}$$

Unter der Annahme, daß die Reglerbandbreite viel größer ist als die Orbit-Störmomente, können folgende Näherungen gemacht werden:

$$H_z = \frac{1}{K_I} \cdot (\dot{T}_{dx} + \dot{T}_{cx}) \tag{16a}$$

$$H_z = \frac{1}{K_I} \cdot (\dot{T}_{dz} + \dot{T}_{cz}) \tag{16b}$$

$$(T_{dx} + T_{cx}) = INT(H_z) \tag{16c}$$

$$(T_{dz} + T_{cz}) = INT(H_x) \tag{16d}$$

Es wird von dem Fall ausgegengen, daß $H_x$ nicht gemessen werden kann. Dem Gierbeobachter wir als Meßgröße der rückgekoppelte Rollwinkel zugeführt, welcher Informationen über die Giergeschwindigkeit enthält und aus dem dann durch entsprechende Wahl der Beobachterparameter <u>h</u> Gierlage und Giergeschwindigkeit geschätzt werden können. Um dies einzusehen, betrachte man die Übertragungsfunktion des geschlossenen Rollregelkreises. Diese erhält man durch Einsetzen des Reglermomentes $T_{wxac}$ und Laplace-Transformation:

$$H_z(s) = \frac{-s\Omega_{Nx} (-sH_x - T_{Dx}^*)}{[s^3 - \Omega_{Nx}[K_{Dx}s^2 + (K_{Px} + \omega_0)s + K_{Ix}]}, \tag{17a}$$

wobei die abkürzende Schreibweise

$$T_{Dx}^* = T_{dx} + T_{cx}, \tag{17b}$$

$$T_{Dz}^* = T_{dz} + T_{cz} \tag{17c}$$

$$\widetilde{T}_{Dx} = T_{Dx}^* - \hat{T}_{Dx}, \tag{17d}$$

$$\widetilde{T}_{Dz} = T_{Dz}^* - \hat{T}_{Dz}, \tag{17e}$$

eingeführt wurde.
Als Meßgröße wird das Signal

$$y = -K_{Ix}(\frac{1}{s} \cdot H_z + K_0 \cdot H_z) = \frac{K_I}{s} \cdot H_z(1+K_0s) \tag{17f}$$

verwendet, welches als gefiltertes Gierwinkelsignal betrachtet werden kann.
Durch Einsetzen in die obigen Gleichungen ergibt sich

$$y = \frac{-K_{Ix}(1+K_0s) \cdot \Omega_{Nx}}{[s^3 - \Omega_{Nx}[K_{Dx} s^2 + (K_{Px} + \omega_0)s + K_{Ix}]} (sH_x + T_{Dx}^*) = F(s)(-sH_x - T_{Dx}^*) \tag{17g}$$

Die Regelmomente $T_{wcx}$ und $T_{wcz}$ bleiben unverändert, da in sie keine Gierinformation einfließt.
Wie bereits oben erwähnt, enthält das Rollwinkel-Regelmoment $T_{wxac}$ nun keinen Entkopplungsanteil $H_x$ mehr, d.h.

$$T_{wxac} = - [K_{Px} H_z^* + K_{Dx} \dot{H}_z^*]f_{NLx} - K_{Ix} \int H_z^* dt \tag{18a}$$

Das Gierwinkel-Regelmoment $T_{wzac}$ besteht aus zwei Teilen,

$$T_{wzac} = T_{wzD} + T_{wzO}, \qquad (18b)$$

wobei $T_{wzD}$ den Entkopplungsanteil von der Rolldynamik zur Gierdynamik bezeichnet,

$$T_{wzD} = -\dot{\hat{H}}_z^*, \qquad (18c)$$

und $T_{wzo}$ das mit Hilfe des Gierbeobachters gebildete Stellsignal

$$T_{wzO} = \underline{k}^T \hat{\underline{x}}. \qquad (18d)$$

Für den Gierlage-Regler gilt:
Mit

$$A = \begin{bmatrix} \dot{:}\,0 & \omega 0 \\ -\Omega N0 & 0 \end{bmatrix}, \quad \underline{b} = \begin{bmatrix} 0 \\ \Omega N0 \end{bmatrix} \qquad (19a)$$

und der Schreibweise

$$\Omega_{N0} = |\Omega_N|. \qquad (19b)$$

Wird für den Beobachter die Struktur angesetzt

$$\dot{\hat{\underline{x}}} = A \cdot \hat{\underline{x}} - \underline{b}\underline{k}^T \hat{\underline{x}} + \underline{h}(y-\hat{y}) + \underline{b} \cdot \hat{T}_{Dz} \qquad (20a)$$

mit

$$y = F(s)(sH_x - T_{Dx}^*) = F(s) \cdot (\underline{c}^T \cdot \underline{x} - T_{Dx}^*) \qquad (20b)$$

und

$$\hat{y} = \hat{F}(s)\,(\underline{c}^T \hat{\underline{x}} - \hat{T}_{Dx}) \qquad (20c)$$

$$\underline{c}^T = [0\ 1],\ \underline{k}^T = [k_1,\, k_2]. \qquad (20\ d,\ e)$$

Der Beobachtervektor $\underline{h}$ enthält die zu wählenden Beobachterparameter $h_1$ und $h_2$:

$$\underline{h}^T = [h_1,\, h_2]. \qquad (20\ f)$$

Letztendlich erhält man für die Reglermomente zur Regelung der Roll- und Gierdynamik:

$$T_{wx} = -(-\theta_b \cdot h_x + \phi_b h_y + h_z) \cdot \omega_0 \cdot \Omega_N - [K_{Px} H_z^* + K_{Dx} \dot{H}_z^* + K_{Ix} \int H_z^* dt] \qquad (21a)$$

$$T_{wz} = (\theta_b \cdot h_z + \psi_b h_y + h_x) \cdot \omega_0 \cdot \Omega_N + \dot{H}_z^* + \underline{k}^T \cdot \hat{\underline{x}} \qquad (21b)$$

Auf den Bildern 5 und 6 sind ein Blockschaltbild für die Drallrad-Regelung bzw. ein Blockschaltbild für den Beobachter dargestellt.

Aus den vorgenannten Gleichungen ergibt sich, dass auch mit diesem besonderen Beobachter weiterhin das Separationsprinzip gültig ist, d.h. der Einfluß des Gier-Reglers und des Gier-Beobachters auf die Stabilität des rückgekoppelte Systems sind voneinander unabhängig. Allerdings beeinflußt die rückgekoppelte Übertragungsfunktion des Roll-Regelkreises, F(s), die Beobachterparameter und das Stabilitätsverhalten.

Der Regler im Roll-Regelkreis muß so entworfen werden, daß der Beobachter nicht durch die Reglerdynamik gestört wird. Typischerweise ist die Bandbreite des Rollregelkreises ungefähr um einen Faktor 10 größer als die Beobachter-Bandbreite.

Die Dynamik der Störmomente im Normalbetrieb ist sehr langsam, da die Störmomente hauptsächlich aus Konstanten bzw. Sinustermen der Frequenz $\omega_0$ und $2\omega_0$ bestehen. Im niedrigen Frequenzbereich aber gilt $|F(j\omega)| \approx 1$, so daß im Normalbetrieb der Einfluß der Dynamik des Roll-Regelkreises auf Giergenauigkeit und Regelgüte vernachlässigbar ist.

Prädiktion der Roll- und Gier-Störmomente ohne externe Regelmomente:

Die Regelgüte des Roll-Regelkreises kann unter Berücksichtigung von Gl. (17a) für kleine Werte von $s=j\omega$ und Rücktransformation in den Zeitbereich

$$H_Z = \phi \cdot |h_y| \approx \frac{1}{K_I} \cdot \left( \dot{T}_{dx} + \ddot{H}_x \right) << 1 \rightarrow \phi \approx 0° \qquad (22a)$$

Hierbei wird angenommen, daß $K_I$ größer als die Amplitude des Störmoments $T_{dx}$ ist.

Gierfehler in Kollinearitätsgebieten bei Störmomentenschätzung und -prädiktion:

Vor und nach diesem Gebiet stehen Roll- und Gierwinkel-Messungen zur Verfügung. Aus Gln. (16 c , d) ist ersichtlich, daß die unbekannten Störmomente durch Integration der als bekannt vorausgesetzten Größen $H_x$ und $H_z$ einfach geschätzt werden können.

Im folgenden wird ein Verfahren zur Schätzung, Prädiktion und Kompensation der Störmomente vorgestellt, mit der sich Lagefehler in Kollinearitätsgebieten weiter verbessern lassen.

Diese Gebiete sind wohlbekannt und können über einen On-Board-Rechner bestimmt werden. Das Verfahren teilt sich in vier Phasen auf. Siehe dazu Bild 7.

In den Phasen 1 und 3 sind der Roll- und der Gierwinkel bekannt. Mit Hilfe der Gln. (16 a-d) können die Störmomente und ihre Ableitungen sehr genau bestimmt werden. In Phase 2, welche ungefähr 1/8 der Periode (24h-Tag) in Anspruch nimmt, wird zu dem speziellen Gierbeobachter für den Gierwinkel-Regelkreis umgeschaltet. Dann werden die Störmomente im Modell um den geschätzten Anteil mit Hilfe zeitabhängiger Funktionen vermindert, deren Herleitung nun beschrieben wird.

Phasen 1a, 3a sind kurze Übergangsphasen von Gierschätzung zu Giermessung und umgekehrt. Die Störmomentenschätzung beginnt, wenn ein stationärer Zustand erreicht ist. Ein Beispiel für eine einfache zeitabhängige Funktion zur Störmomentenschätzung ist das Polynom 2. Ordnung

$$\hat{T}_D \cdot (\Delta t) = A_0 + B_0 \cdot \Delta t + C_0 \cdot D\Delta t^2 \qquad \text{mit } \Delta t = t - t_1 \qquad (22b)$$

für $t_1 \leq t \leq t_3$ sind $A_0$, $B_0$ und $C_0$ zu bestimmende Koeffizienten, die aus bekannten Funktionswerten berechnet werden:

$$A_0 = \underline{\bar{T}}Di(t_1) \qquad (22c)$$

$$B_0 = \dot{\bar{T}}_{Di}(t_1) \qquad (22d)$$

$$C_0 = \frac{\overline{T}^*_{Di}(t_3) - \overline{T}_{Dz}(t_1)}{(t_3 - t_1)^2} - \frac{\overline{\overline{T}}_{Di}(t_1)}{(t_3 - t_1)} \qquad (22e)$$

Die Werte $T_{Di}(t_1)$, $\overline{\overline{T}}_{Di}(t_1)$, $\overline{T}_{Di}*(t_3)$, i = x,z, können aus Gln. (16 a-d) hergeleitet werden. Zunächst erscheint es problematisch, den Wert von $T_{Di}(t_3)$ bestimmen zu können, bevor der Satellit das Kollinearitätsgebiet verläßt. Doch unter der Annahme, daß die Änderungen der Störgröße vom einen zum anderen Tag gering sind (kleiner als 3 %), kann für den Prädiktionsalgorithmus der Wert von $T_{Di}(t_3)$ vom Vortag verwendet werden,

$$\overline{T}^*_{Di}(t_3) = \overline{T}_{Di}(t_3 - 1 \text{ Tag}) \qquad (23)$$

Unter Verwendung der Beobachterparameter $h_1 = 0$, $h_2 = h_2{}^* \cdot \Omega_{N0}$ erhält man für den stationären Gierwinkelfehler

$$\psi(t) = \left( h_2^* \cdot \left( T_{dx}(t) - \hat{T}_{Dx}(t) \right) + \left( T_{dz}(t) - \hat{T}_{Dz}(t) \right) \right) \cdot \frac{57.3°}{\left| h_y \right| \cdot \omega_0} \qquad (24)$$

Die Genauigkeit des Gierwinkelfehlers kann im Kollinearitätsgebiet um einen Faktor 3-5 verbessert werden.

Rollwinkelmessung und Gierwinkelbeobachter bei Verwendung eines Kompensationsmomentes:

Mit dem Kompensationsmoment $T_{ccx}$ .ergibt sich nach Transformation der Gleichungen in den s-Bereich für kleine s und den Beobachterparameter $h_1 = 0$ durch Laplace-Transformieren und Zusammenfassen in Vektorschreibweise:

$$\begin{bmatrix} h_x \\ h_z \end{bmatrix} =$$

$$\frac{\begin{bmatrix} s + \omega_0 \theta_b & \omega_0 \\ -\omega_0 + \dfrac{h_z}{\Omega_{N0}} K_x & s + K_x + \omega_0 \theta_0 \end{bmatrix} \left( \begin{bmatrix} T^0_{Dx} \\ -\dfrac{h_z}{\Omega_{N0}} \bullet T^0_{Dx} \end{bmatrix} + \begin{bmatrix} 0 \\ +\dfrac{h_z}{\Omega_N} \end{bmatrix} \hat{T}_{Dx} + \begin{bmatrix} 0 \\ 1 \end{bmatrix} \hat{T}_{Dz} + \begin{bmatrix} \phi_b \cdot h_y \cdot \omega_0 \\ \psi_b \cdot h_y \, \omega_0 \end{bmatrix} \right)}{s^2 + (K_x + \omega_0 \theta_B)s + \omega_0^2 - \dfrac{h_z}{\Omega_N 0} \cdot K_x \cdot \omega_0 + \omega_0 \theta_B (K_x + \omega_0 \theta_B)}$$

als Gleichung (25)
mit der Schreibweise

$$T_{Dx}{}^0 = T_{dx} - \hat{T}_{ccx} \qquad (26a)$$

$$T_{Dz}{}^0 = T_{dz} - \hat{T}_{ccz} \qquad (26b)$$

Dabei sind $T_{Dx}$, und $T_{Dz}$ geschätzte Störmomente, welche in den Beobachter eingehen. Die äußeren Regelmomente zur Drallentladung lauten:

$$T_{cx} = -K_x \, h_x - \hat{T}_{ccx} \qquad (27a)$$

$$T_{cz} = -K_z\, h_z - \hat{T}_{ccz}. \tag{27b}$$

Die Momente $_{ccx}$ und $_{ccz}$ sind äußere Kompensationsmomente für die Störmomente in Rollen und Gieren. Aus Gl. (25) ist zu erkennen, daß nur äußere Momente in x-Richtung mit den Drallradkomponenten $h_x$ oder $h_z$ beobachtet werden können.

Gierwinkelfehler durch Störmomente:

Die Störmomente im Normalbetriebszustand lassen sich im Satelliten-Koordinatensystem darstellen als

$$T_{dx} = A_{0x} + A_I \cos \omega t - T_{DxR}\,(\omega, t) \tag{28a}$$

$$T_{dz} = A_{0z} - A_I \sin \omega t - T_{DzR}\,(\omega, t) \tag{28b}$$

Die Anteile $A_{0x}$, $A_{0z}$ stammen von der unsymmetrischen Konfiguration des Raumflugkörpers her und sind abhängig von den Reflektionskoeffizienten und vom Sonnenvektor. Sie sind abhängig von der Jahreszeit und werden über einen Tag als konstant angenommen. Zwar sind $A_{0x}$, $A_{0z}$ nicht einfach zu bestimmen, aber das Verhältnis $A_{0x}/A_{0z}$ ist im allgemeinen gut bekannt. Wenn also ein Anteil bestimmt ist, kann über das bekannte Verhältnis zwischen den Anteilen der andere Anteil berechnet werden.
Die einflußreichste Komponente der Störmomente $T_{Dx}$, $T_{Dz}$ ist der inertial-konstante Anteil $A_I$, welcher direkt von der Verschiebung des Schwerpunkts, der unsymmetrischen Form des Solargenerators den Reflektionskoeffizienten, dem Sonnenvektor und weiteren jahreszeitabhängigen Effekten abhängt. Dieser Anteil verursacht im allgemeinen den großen Gierwinkelfehler, wenn ausschließlich der gemessene, rückgekoppelte Rollwinkel für den Gierwinkel-Beobachter verwendet wird.
Die Residuen $T_{DxR}$, $T_{DzR}$ können normalerweise vernachlässigt werden. Bei sehr großen Solarflügeln müssen in der Fehlerabschätzung auch höherfrequente Schwingungen berücksichtigt werden. Es lässt sich zeigen, dass der inertial-konstante Anteil $A_I$ keinen Einfluß auf die Amplitude des Gierwinkelfehlers hat, wenn für die Reglerparameter $K_x = K_z$ gewählt wird.
Die bahn-konstanten Anteile $A_{0x}$ und $A_{0z}$ der Störmomente im Normalbetriebszustand in Gl. (28 a,b) lassen sich mit zwei Verfahren schätzen, die im folgenden vorgestellt werden.

1. Verfahren

Zunächst werden von den Drallradkomponenten die Bias-Anteile abgezogen. Von Gl. (25) erhält man unter Vernachlässigung von Termen höherer Ordnung (z. B. $\omega_0 \theta_B$) und nach Subtraktion der Bias-Anteile:

$$h_x^* = h_x - h_{xb} = \frac{-T_{Dx}^0 \cdot \dfrac{h_z}{\Omega_{N0}}}{\omega_0 - \dfrac{h_z}{\Omega_{N0}} \cdot K_x}, \tag{29a}$$

$$h_z^* = h_z - h_{xb} = \frac{-T_{Dx}^0}{\omega_0 - \dfrac{h_z}{\Omega_{N0}} \cdot K_x}, \tag{29b}$$

wobei für die Störeingänge in den Beobachter und den Beobachterparameter $h_I$ gewählt wurde:

$$\hat{T}_{Dx} = \hat{T}_{Dz} = 0\,;\ h_1 = 0. \tag{29c}$$

Einsetzen der Gln. (26 a,b) in die Gln. (29 a,b) ergibt:
Weil nur der Einfluß des konstanten Teils $A_{0x}$ der Störung $T_{dx}$ in Gl. (28a) untersucht werden soll, werden die höherfrequenten Schwingungsanteile über einen Tag ausgemittelt, d.h. Schwingungsanteile mit der Frequenz $n \cdot \omega_0$ (n=1,2,3,..) haben keinen Einfluß:

$$\overline{h}_x = \frac{1}{T_{per}} \int_0^{T_{per}} h_x^* dt \,;\; T_{per} = \frac{1}{\omega_0} \cdot 2\pi \qquad (30a)$$

$$\overline{h}_z = \frac{1}{T_{per}} \int_0^{T_{per}} h_z^* dt \qquad (30b)$$

Das Ergebnis der Integration ist:

$$\overline{h}_z = \frac{-(A_{0x} - \hat{T}_{ccx})}{\left( \omega_0 - \frac{h2}{\Omega_{N0}} \cdot K_x \right)} \qquad (31a)$$

$$\overline{h}_x = \frac{-(A_{0x} - \hat{T}_{ccx})\dfrac{h2}{\Omega_N 0}}{\left( \omega_0 - \frac{h2}{\Omega_{N0}} \cdot K_x \right)} \qquad (31b)$$

Der Schätzfehler $x_1$ berechnet sich mit $h_1 = 0$, $s \to 0$:

$$\tilde{x}_1 = T_{DOz}^0 - K_z \cdot \overline{h}_2 + \frac{h_z}{\Omega_{N0}} (T_{DOx}^0 - K_x \cdot \overline{h}_x) \qquad (32)$$

mit

$$T_{DOx}{}^0 = A_{0x} - T_{ccx} \qquad (33a)$$

$$T_{DOz}{}^0 = A_{0z} - T_{ccz}. \qquad (33b)$$

Ein einfaches Modell für den Zusammenhang zwischen $A_{0z}$ und $A_{0x}$ ist:

$$A_{0z} = C\,A_{0x}, \qquad (34)$$

wobei die Konstante C von der Konfiguration des Raumflugkörpers und der Jahreszeit abhängt.
Im folgenden wird ein Iterationsalgorithmus vorgestellt, mit dem die Kompensationsmomente $T_{ccx}$ und $T_{ccz}$

berechnet werden können:

$$\tilde{x}_1 = T^0_{DOzj} + \frac{\left(K_z + \omega_0 \dfrac{h_z}{\Omega_{NO}}\right)}{\left(\omega_0 - \dfrac{h_z}{\Omega_{NO}} \cdot K_x\right)} \cdot T^0_{DOxj} \qquad (35a)$$

$$j = INT\left(\frac{1}{T_{per}} \cdot \int_0^t d\tau^0\right) \qquad (35b)$$

$$j \leq 0: \hat{T}_{ccj} = 0, \bar{h}_z(j) = 0 \qquad (35c)$$

$$TDOx(j) = -\bar{h}_z(j) \cdot \left(\omega_0 - \frac{h_z}{\Omega_{N0}} \cdot K_x\right) \qquad (35d)$$

$$\hat{T}_{ccx}(j) = f(j) \cdot T_{DOx}(j) + \hat{T}_{ccx}(j-1) \qquad (35e)$$

$$f(j) = k_0 + k_{ie}^{-j} \qquad (35f)$$

$$\hat{T}_{ccz}(j) = C \cdot \hat{T}_{ccx}(j); \ 0 < K_0 + k_1 < 1 \qquad (35g)$$

Die Auswirkungen von Unsicherheiten in den Parametern C und $A_{0x}$, $\Delta C$ und $\Delta A_{0x}$, auf den Gierwinkelfehler können drastisch vermindert werden. Aus Gl. (35b) ergibt sich ein GierwinkelSchätzfehler von

$$\Delta \tilde{x}_1 = \Delta A_{0z} + \Delta A_{0x} \cdot \left(\frac{K + \omega_0 \dfrac{h_z}{\Omega_{NO}}}{\omega_0 - K \dfrac{h_z}{\Omega_{NO}}}\right) \qquad (36a)$$

$$\Delta \psi = \Delta \tilde{x}_1 \cdot \frac{57.3 \deg}{|h_y| \cdot \omega_0} \qquad (36c)$$

$$\Delta A_{0z} = \Delta C \cdot A_{0x} + \Delta C \cdot A_{0x} \qquad (36b)$$

Der Schätzfehler in Gl. (36a) kann durch Einsetzen der Gln. (10b) umgerechnet werden in den Gierwinkelfehler. Der Residuenanteil des z-Störmomentes in Gl. (28b), $T_{dzR}(\omega, t)$, kann im Gierbeobachter nicht geschätzt werden.

Normalerweise ist er aber von geringer Bedeutung.
Der restliche Gierwinkelfehler berechnet sich somit zu:

$$\psi_R = \Delta\psi + T_{DzR} \cdot \frac{57.3\text{deg}}{|hy| \cdot \omega_0}. \tag{36d}$$

### 2. Verfahren

Ein weiteres Verfahren zur Schätzung und Kompensation bahn-konstanter Störmomentanteile basiert ebenfalls auf Gl. (25). Die Idee bei diesem Verfahren ist, die Kompensationsmomente als Beobachter-Störeingänge zu verwenden. Im Prinzip ist auch eine Kombination des ersten und des zweiten Verfahrens denkbar, bei dem die Störmomente zum Teil kompensiert werden und zum Teil Störmomente für den Beobachter berechnet werden.
Wie beim ersten Verfahren werden von den Drallradkomponenten die Bias-Anteile abgezogen. Von Gl. (25) erhält man unter Vernachlässigung von Termen höherer Ordnung (z. B. $\omega_0\theta_B$) und nach Subtraktion der in den Bias-Anteile:

$$h_x^* = h_x - h_{xb} = \frac{-\frac{h_2}{\Omega_N}T_{Dx}^0 + \frac{h_2}{\Omega_N}\hat{T}_{Dx} + \hat{T}_{Dz}}{\omega_0 - \frac{h_x}{\Omega_{N0}} \cdot K_x}, \tag{37a}$$

$$h_z^* = h_z - h_{zb} = \frac{-T_{Dx}^0 + \frac{h_2}{\omega_0\Omega_N}K_x\hat{T}_{Dx} + \frac{K_x}{\omega_0}\hat{T}_{Dz}}{\omega_0 - \frac{h_x}{\Omega_{N0}} \cdot K_x} \tag{37b}$$

mit den zu bestimmenden Störeingängen $T_{Dx}$ und $T_{Dz}$.
Wie beim ersten Verfahren werden statt $h_x^*$ und $h_z^*$ ihre über den Tag gemittelten Werte verwendet, siehe Gln. (31a, b). Mit den Schreibweisen

$$h_2 / \Omega_N \quad =: a \tag{38a}$$

$$K_x / \omega_0 \quad =: K_x^* \tag{38b}$$

$$\omega_0 - h_2/\Omega_N K_x \quad =: K \tag{38c}$$

$$H_x^* \quad =: h_x K \tag{38d}$$

$$H_z^* \quad =: h_z K \tag{38e}$$

ergibt sich für Gln. (37)

$$\bar{H}_x^* = -aT_{Dx}^0 + a\hat{T}_{Dx} + \hat{T}_{Dz} \tag{39a}$$

$$\bar{H}_z^* = -T_{Dx}^0 + K_x^*(a\hat{T}_{Dx} + \hat{T}_{Dz}) \tag{39b}$$

Aus Gl. (39b) folgt

$$T_{Dx}^0 = -\bar{H}_z^* + K_x^*(a\hat{T}_{Dx} + \hat{T}_{Dz}) \tag{39c}$$

Dieser Ausdruck wird verwendet, um solche Störeingänge für den Beobachter zu berechnen, daß der Gierschätzfehler möglichst klein wird.

Der Schätzfehler $x_1$ berechnet sich mit $h_1 = 0$, $s \to 0$:

$$\tilde{x}_1 = \frac{h2}{\Omega_N}\tilde{T}_{Dx} + \tilde{T}_{Dz} \tag{40}$$

Mit den Gln. (17 b,c) (27 a,b) und (26a,b) ergibt sich für Gl (40)

$$\tilde{x}_1 = \frac{h2}{\Omega_N}\left(T_{Dx}^0 - \hat{T}_{Dx} - \frac{K_x}{K}\bar{H}_x^*\right) + \left(T_{Dz}^0 - \hat{T}_{Dz} - \frac{Kz}{K}\bar{H}_z^*\right) \tag{41}$$

Im ersten Klammerausdruck in Gl. (41) sind alle Terme bekannt oder meßbar, so daß eine sinnvolle Bedingung für die zu entwerfenden Beobachter-Störeingänge $T_{Dx}$ und $T_{Dz}$ ist, den Klammerausdruck nullzusetzen. Mit Gl. (39c) ergibt sich somit

$$-\bar{H}_x^*\frac{K_x}{K} - \hat{T}_{Dx} - \bar{H}_z^* + K_x^*(a\hat{T}_{Dx} + \hat{T}_{Dz}) = 0 \tag{42a}$$

In den zweiten Klammerausdruck von Gl. (41) geht in den Störterm $T_{Dz}=T_{dz}-T_{ccz}$ (Gl. 26b) die nicht beobachtbare Störgröße $T_{dz}$ ein, so daß sich keine Kombination aus $T_{Dx}$ und $T_{Dz}$ finden läßt, für die der rechte Klammerausdruck null ist. Daher wird als zweite Bedingung

$$\hat{T}_{Dz} = -\frac{K_z}{K}\bar{H}_z^* \tag{42b}$$

gewählt. Einsetzen von Gl. (42b) in Gl. (42a) führt auf den Beobachter-Störeingang in x-Richtung:

$$\hat{T}_{Dx} = \omega_0 \frac{-\bar{h}_x K_x - \bar{h}_z\left(\omega_0 + K_x\left(\frac{K_z}{\omega_0} - \frac{h2}{\Omega_N}\right)\right)}{\omega_0 - \frac{h2}{\Omega_N}K_x} \tag{42c}$$

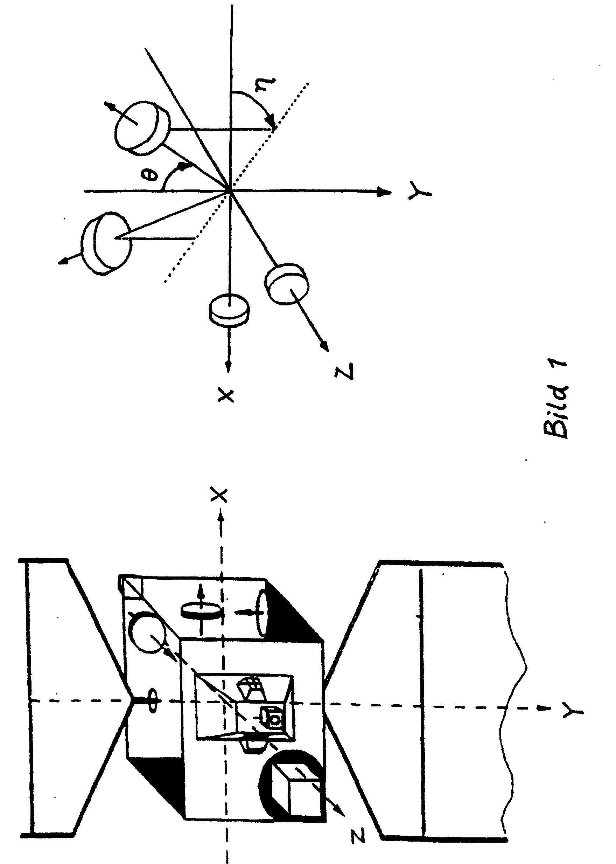

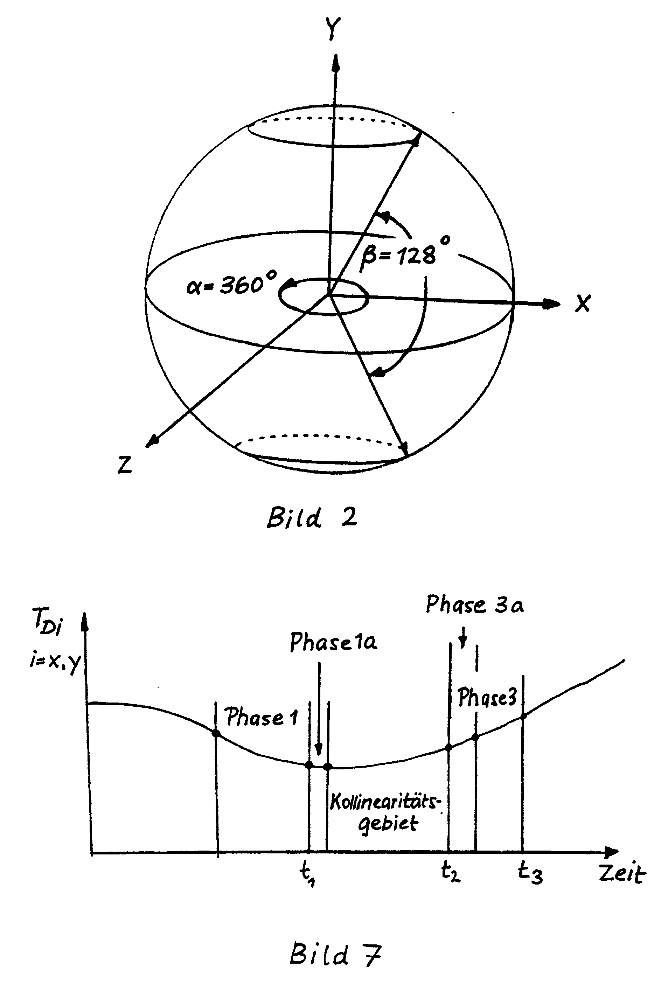

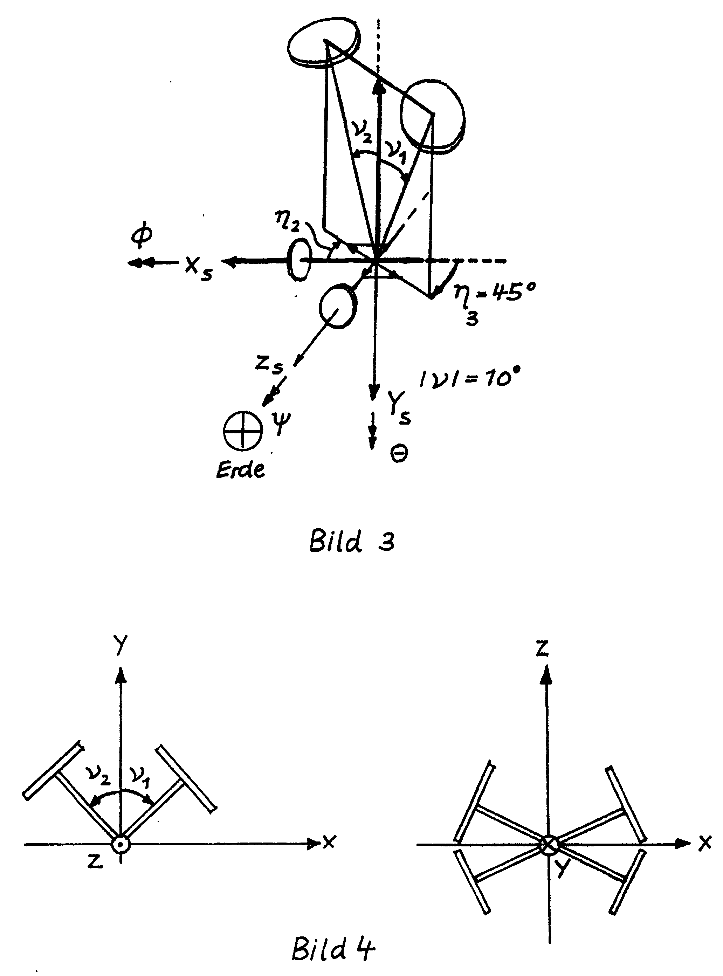

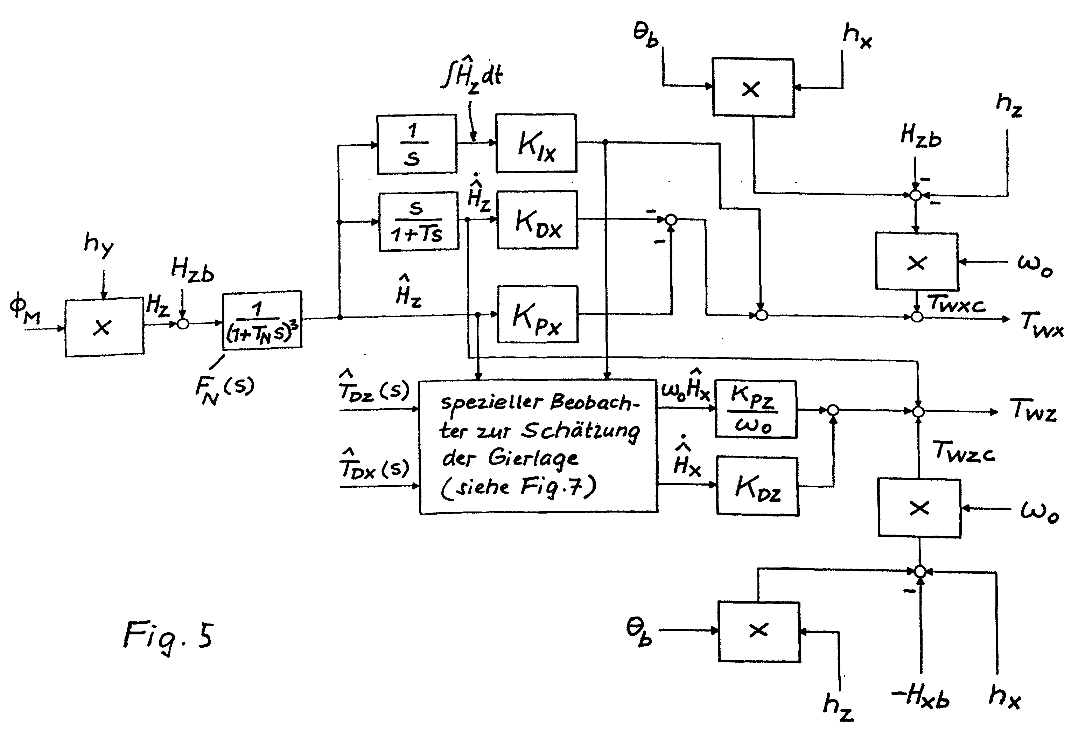

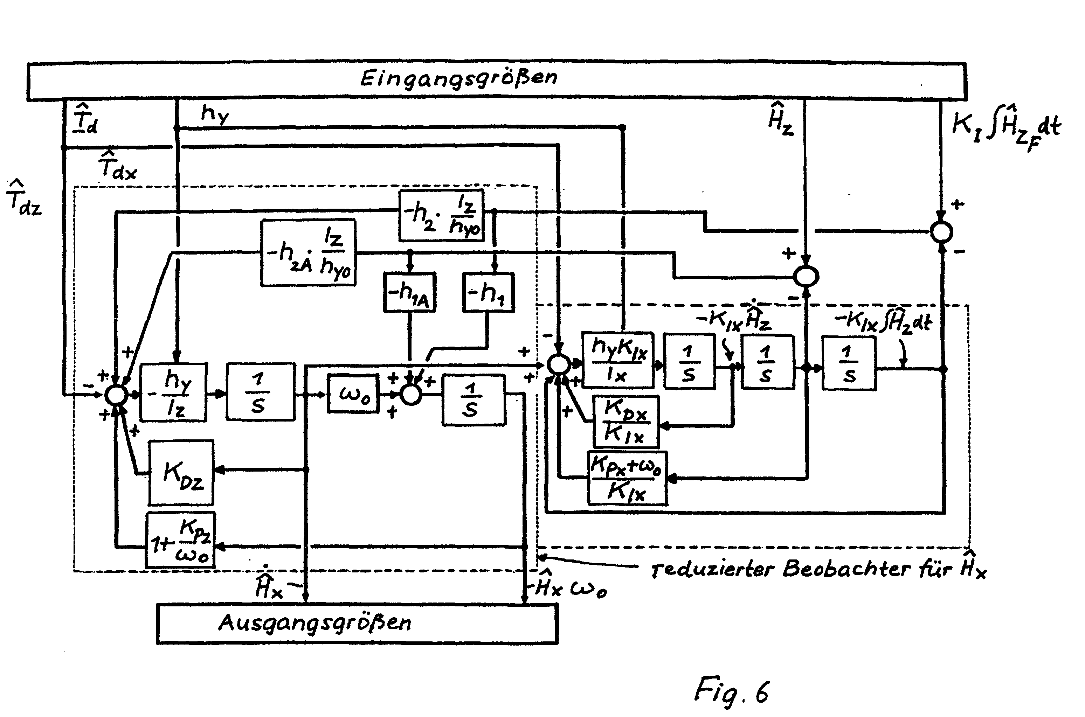

**Patentansprüche**

**1.** Verfahren zur Lageregelung und Stabilisierung eines dreiachsenstabilisier-ten, drallbehafteten, auf einer Umlaufbahn um einen Himmelskörper umlaufenden Raumfahrzeuges, **dadurch gekennzeichnet, dass** für den Fall fehlender Lageabweichungsmessung bezüglich der Gierachse auf einem Abschnitt der Umlaufbahn zur Schätzung dieser fehlenden Lageabwei-chung ein Beobachter verwendet und in diesen geschätzte Störmomente gemäß einer zeitabhängigen Funktion eingeführt werden, welche aus Größen für die Störmomente sowie für deren zeitliche Ableitungen ermittelbar sind, die einerseits vor Eintritt des Raumfahrzeuges in den Abschnitt der Umlaufbahn und andererseits nach dem vorhergehenden Austritt aus diesem Abschnitt durch zeitliche Integration von $H_x = h_y \Psi$ und $H_z = -h_y \Phi$ bestimmt worden sind, wobei $h_y$ die Größe des von der Drallrad-anordnung in der bevorzugten Richtung erzeugten Drehmomentes und $\Phi$, $\Psi$ die von den Lagesensoren außerhalb des Abschnittes der Umlaufbahn gemessenen Lageabweichungen um die beiden Querachsen sind.

**2.** Verfahren nach Anspruch 1,
**dadurch gekennzeichnet,**
**dass** durch einen Regelalgorithmus eine aktive Nutationsentkopplung bei gleichzeitiger Entkopplung der Rollachse und Gierachse erfolgt.

## Claims

**1.** Process for attitude control and stabilisation of a tri-axially stabilised spacecraft subject to spin, and circulating in an orbit about a heavenly body, **characterised in that** in the absence of measurement of attitude deviation with respect to the yaw axis over a section of the orbital path an observer is used to estimate this missing attitude deviation, and estimated perturbation moments are introduced into this observer according to a time-dependent function, which moments can be determined from values for the perturbation moments and for their time derivatives that have been determined on the one hand before entry of the spacecraft into the section of the orbital path, and on the other hand after the previous exit from this section, by time integration of $H_x = h_y \Psi$ and $H_z = h_y \phi$, where $h_y$ is the value of the torque generated by the flywheel arrangement in the preferred direction, and $\phi, \Psi$ are the attitude deviations about the two transverse axes which are measured outside the section of the orbital path.

**2.** Process according to claim 1, **characterised in that** an active nutation decoupling with simultaneous decoupling of the roll axis and the yaw axis is effected by means of a control algorithm.

## Revendications

**1.** Procédé de régulation d'attitude et de stabilisation d'un engin spatial stabilisé sur trois axes, soumis à une rotation propre, sur une trajectoire autour d'un corps céleste,
**caractérisé en ce qu'**
en cas d'absence de mesure de déviation d'attitude par rapport à l'axe de lacet sur un segment de la trajectoire, on utilise un observateur pour évaluer cette déviation d'attitude manquante, et on introduit dans celui-ci des couples perturbateurs évalués selon une fonction du temps et calculés à partir de grandeurs pour les couples perturbateurs ainsi que pour leurs dérivées dans le temps, qui ont été déterminées d'une part avant l'arrivée de l'engin spatial sur le segment de la trajectoire et d'autre part après la sortie précédente de ce segment, par intégration en fonction du temps de $H_x = h_y \Psi$ et $H_z = -h_y \Phi$, $h_y$ étant l'amplitude du couple généré dans la direction préférentielle par le dispositif à roues de rotation, et $\Phi$, $\Psi$ étant les déviations d'attitude mesurées autour des deux axes transversaux par les capteurs de position en dehors du segment de la trajectoire.

**2.** Procédé selon la revendication 1,
**caractérisé en ce qu'**
un algorithme de régulation effectue un découplage actif de nutation et en même temps un découplage de l'axe de roulis et de l'axe de lacet.

Bild 1

Y

$\beta = 128°$

$\alpha = 360°$

X

Z

Bild 2

$T_{Di}$
$i=x,y$

Phase 3a

Phase1a

Phase 1

Phase3

Kollinearitätsgebiet

$t_1$     $t_2$     $t_3$     Zeit

Bild 7

Bild 3

Bild 4

Fig. 5

Fig. 6